# EUROPEAN PATENT APPLICATION

(11) **EP 1 346 959 A1**
(43) Date of publication of application: **24.09.2003**
(21) Application number: 01272317.7
(22) Date of filing: 25.12.2001
(51) Int. Cl.: C03B 37/12, G02B 6/00

(54) **COATED OPTICAL FIBER AND PRODUCTION METHOD THEREFOR**

(30) Priority: 22.12.2000 JP 2000389746
(71) Applicant: Sumitomo Electric Industries, Ltd., Osaka-shi, Osaka 541-0041 (JP)
(72) Inventor: SUZUKI, Atsushi, Sumitomo Electric Industries, Ltd, Yokohama-shi, Kanagawa 244-8588 (JP); HATTORI, Tomoyuki, Sumitomo Electric Ind., Ltd, Yokohama-shi, Kanagawa 244-8588 (JP)
(74) Representative: Cross, Rupert Edward Blount
(86) International application number: JP0111394
(87) International publication number: WO02051763

(57) **Abstract**

The present invention is a method of making a coated optical fiber comprising a first step of obtaining a glass optical fiber by drawing an optical fiber glass preform, a second step of forming the glass optical fiber with two layers of coating, and a third step of applying a twist to the glass optical fiber by using a swinging guide roller; wherein the glass optical fiber has a tension T of at least 2.2 (N/fiber) in the first step; and wherein T/R is 28 to 100, where R (m) is the barrel radius of the swinging guide roller, and the number of swinging movements of the swinging guide roller is 0.33 to 3.33 (s⁻¹) in the third step . According to the present invention, the polarization mode dispersion (PMD value) of thus obtained coated optical fiber can reliably be reduced.

## Description

### Technical Field

The present invention relates to a coated optical fiber employed as a transmission line for optical communications, and a method of making the same.

### Background Art

In the making of an optical fiber, it is difficult for core and cladding portions to become completely perfect circles while being concentric, whereby the core and cladding portions attain a slightly elliptical or distorted circular form. As a consequence, the refractive index distribution in the cross-sectional structure of an optical fiber is not completely even. This may be problematic in that it causes a difference between group velocities of two polarized waves orthogonal to each other within an optical fiber cross section, thereby increasing polarization mode dispersion (PMD).

In recent years, wavelength division multiplexing (WDM) communication systems have come into practical use for long-distance, high bit rate optical communications such as those using submarine cables . The influence of PMD appears greatly in WDM optical communications, and thus is required to be reduced. Known as a method for lowering the PMD is one comprising the steps of drawing a glass optical fiber from an optical fiber glass preform, coating the glass optical fiber with a coating material so as to enhance the strength thereof, and then drawing the optical fiber with a predetermined twist applied thereto using a guide roller where a rotational axis swings regularly (see, e.g., Japanese Patent Application Laid-Open No. HEI 6-171970, No. HEI 8-295528, and No. HEI 9-243833).

### Disclosure of the Invention

The inventors studied the conventional making methods disclosed in the above-mentioned publications and, as a result, have found that there are cases where, even when these making methods are used, the resulting coated optical fiber attains a high PMD value depending on the state of applying a twist to the glass optical fiber.

Therefore, it is an object of the present invention to provide a method of making a coated optical fiber and a coated optical fiber which can reliably lower the PMD even when a twist is applied to the glass optical fiber.

The inventors further conducted diligent studies and, as a result, have concluded that the PMD value becomes higher in the case where no twist is applied to the coated optical fiber when the fiber slides on a swinging guide roller even though the roller is swinging, thereby finding out that the coated optical fiber can be prevented from slipping when the tension of the glass optical fiber at the time of drawing, the ratio between the barrel radius of swinging guide roller and the tension, and the number of swinging movements fall within their specific ranges, thus accomplishing the present invention.

Namely, the present invention is a method of making a coated optical fiber including a first step of obtaining a glass optical fiber by drawing an optical fiber glass preform, a second step of forming the glass optical fiber with two layers of coating, and a third step of applying a twist to the glass optical fiber by using a swinging guide roller, wherein the glass optical fiber has a tension T of at least 2.2 (N/fiber) in the first step; and wherein T/R is 28 to 100, where R (m) is the barrel radius of the swinging guide roller, and the number of swinging movements of the swinging guide roller is 0.33 to 3.33 (s⁻¹) in the third step.

Preferably, the glass optical fiber has a tension T of 5.0 (N/fiber) or less in the first step.

Preferably, in the second step, the glass optical fiber is coated with a first layer coating such that the first layer coating has a Young's modulus of 0.2 to 0.7 (MPa).

Preferably, in the second step, a second layer coating is coated on the first layer coating such that the second layer coating has a Young's modulus of 150 to 1500 (MPa).

Preferably, in the second step, a first layer coating having a breaking strength of at least 4.0 (MPa) is formed on the glass optical fiber.

Preferably, in the second step, a first layer coating having an adhesion force of 0.5 to 2.0 (N/cm) with respect to glass is formed on the glass optical fiber.

Preferably, in the second step, the first layer coating is formed on the glass optical fiber by using a coating resin material containing an oligomer having a molecular weight of at least 5000, a multifunctional monomer having a methylene group with a carbon number of 5 to 11, and a monomer having a heterocycle and/or a monomer having a multi-membered ring, the multifunctional monomer having a weight ratio of 0.02 to 0.04 with respect to the oligomer.

Also, the present invention provides a coated optical fiber made by the above-mentioned method of making a coated optical fiber.

### Brief Description of the Drawings

Fig. 1 is a schematic view showing an apparatus for making the coated optical fiber in accordance with the present invention;
Fig. 2A is a perspective view showing an optical fiber glass preform;
Fig. 2B is a perspective view showing a part of a glass optical fiber formed with a first layer coating;
Fig. 2C is a perspective view showing a part of the coated optical fiber;
Fig. 3 is a view for explaining the positional relationship between a swinging guide roller and a stationary guide roller;
Fig. 4 is a view for explaining the positional relationship between the swinging guide roller and a guide roller;
Fig. 5 is a front view showing a swinging guide roller of a type different from that of the swinging guide roller of Figs. 3 and 4, and a stationary guide roller; and
Fig. 6 is a side view showing the swinging guide roller and stationary guide roller as seen from the direction of B in Fig. 5.

### Best Modes for Carrying Out the Invention

Embodiments of the present invention will be explained in detail in the following.

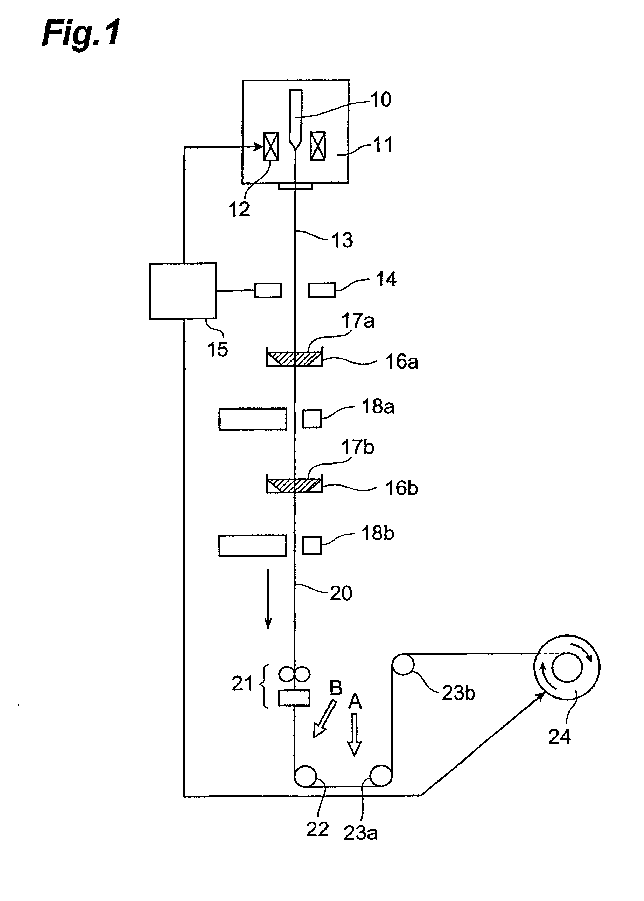

Fig. 1 is a schematic view showing an example of apparatus for making the coated optical fiber in accordance with the present invention, illustrating a process in which a glass optical fiber drawn from an optical fiber glass preform ends up being wound about a drum. This apparatus is equivalent to that disclosed in Japanese Patent Application Laid-Open No. HEI 8-295528.

In Fig. 1, 10 refers to an optical fiber glass preform, 11 a drawing furnace, 12 a heater, 13 a glass optical fiber, 14 a laser outer diameter meter, 15 a drawing control section, 16a, 16b coating dies, 17a, 17b coating resin materials, 18a, 18b UV irradiating apparatus, 20 a coated optical fiber, 21 a guide roller, 22 a swinging guide roller, 23a, 23b stationary guide rollers, and 24 a drum.

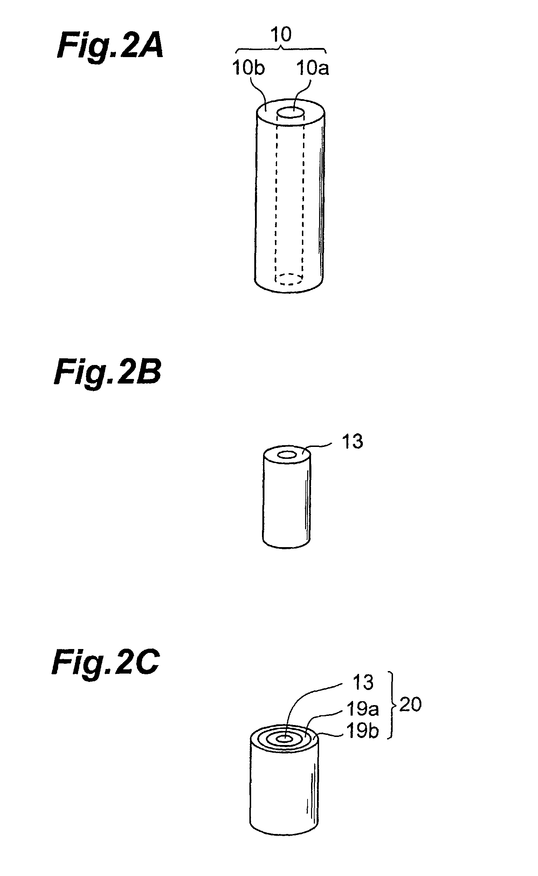

As the optical fiber glass preform 10, those made by various methods such as vapor-phase axial deposition method (VAD method), outside vapor deposition method (OVD method), and modified chemical vapor deposition method (MCVD method) can be used. As shown in Fig. 2A, the optical fiber glass preform 10 comprises a core part 10a to become a core of the glass optical fiber 13, and a cladding part 10b to become a cladding of the glass optical fiber 13. The optical fiber glass preform 10 is set within the drawing furnace 11, so that one end of the optical fiber glass preform 10 is heated/softened by the heater 12, whereby the glass optical fiber 13 shown in Fig. 2B is drawn (first step) . The drawing rate is 100 m/min, for example, though it can be selected variously. In this embodiment, a dispersion-shifted fiber having an outside diameter of 125 µm, a double core type refractive index profile, and an effective core area of 85 µm² is used as the glass optical fiber 13.

The outer diameter of the drawn glass optical fiber 13 is measured by the laser outer diameter meter 14. The result of measurement of the outer diameter of the glass optical fiber 13 is fed back to the drawing control section 15, whereby the heating temperature of the heater 12 and the drawing rate of the glass optical fiber 13 are controlled so as to attain a predetermined outer diameter (usually 125 µm).

The glass optical fiber 13 drawn to a predetermined outer diameter is coated with a first layer coating 19a by the first coating die 16a to which the coating resin material 17a having a low Young' s modulus is supplied. The first layer coating 19a is formed such that the coating resin material 17a is cured by the first UV irradiating apparatus 18a so as to have a coating outer diameter of about 200 µm after curing.

Subsequently, the optical fiber coated with the first layer coating 19a is coated with a second layer coating 19b by the second coating die 16b to which the coating resin material 17b having a high Young's modulus is supplied. The second layer coating 19b is formed such that the coating resin material 17b is cured by the second UV irradiating apparatus 18b so as to have a coating outer diameter of about 245 µm after curing (see Fig. 2C).

Thus, two layers of coating are formed on the glass optical fiber 13 (second step).

Here, a single coating die may apply the coating resin material 17a having a low Young's modulus onto the glass optical fiber 13, and the coating resin material 17b having a high Young's modulus thereon, and then a UV irradiating apparatus may simultaneously cure both resin materials.

In this embodiment, a UV-curable polyether type urethane acrylate resin is used as a specific example of each of the coating resin materials 17a, 17b. The coating resin materials 17a, 17b may also contain a diluent monomer for diluting the urethane acrylate resin. Further, the coating resin material 17a may contain a polar monomer (e.g., acrylamide, N-vinyl pyrrolidone, and acryloyl morpholine), a monomer having a heterocycle (e.g., N-vinyl caprolactam), and a monomer having a multi-membered ring (e.g., isobornyl acrylate).

Thus obtained coated optical fiber 20 subsequently passes the guide roller 21, swinging guide roller 22, and stationary guide rollers 23a and 23b, so as to be taken up by the drum 24. The guide roller 21 comprises a roller pair 21a and a roller pair 21b disposed parallel thereto, whereas the coated optical fiber 20 is guided through the gap (about 2 mm) between the pair of rollers 21a and the gap (about 2 mm) between the pair of rollers 21b. As explained in the following, the swinging guide roller 22 is used for lowering the PMD by alternately twisting the coated optical fiber 20.

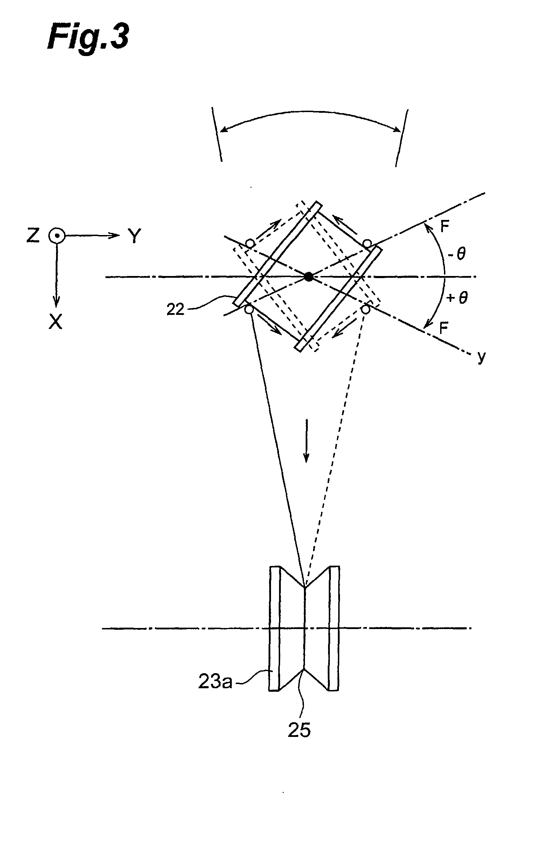

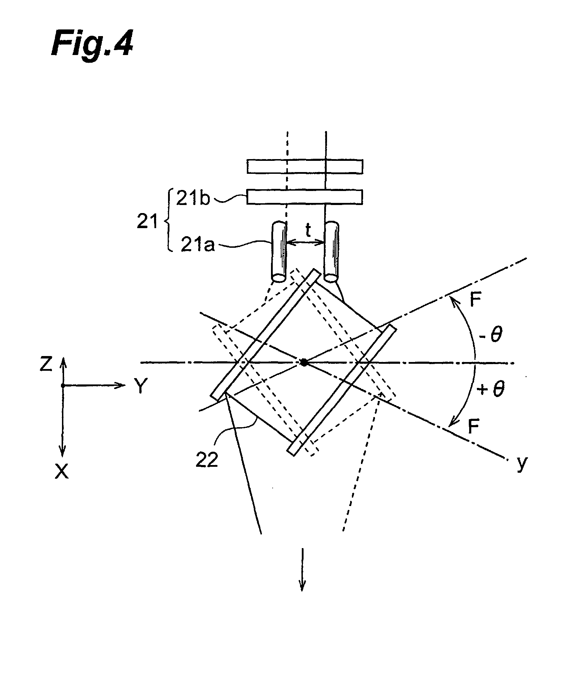

Figs. 3 and 4 are views for explaining how the swinging guide roller 22 twists the coated optical fiber 20. Fig. 3 is a view showing the positional relationship between the swinging guide roller 22 and the stationary guide roller 23a as seen from the direction of A in Fig. 1, whereas Fig. 4 is a view showing the positional relationship between the swinging guide roller 22 and the guide roller 21 as seen from the direction of B in Fig. 1.

When the rotary shaft y of the swinging guide roller 22 pivots by +θ about the drawing axis z in Fig. 3, a sidewise force is applied to the coated optical fiber 20 due to the pivoting, whereby the coated optical fiber 20 rotates on the surface of the swinging guide roller 22. This rotation twists the coated optical fiber 20. Subsequently, the swinging guide roller 22 is pivoted to the opposite direction by -θ, whereby the coated optical fiber 20 rotates on the surface of the swinging guide roller 22 in the opposite direction. Thus, the swinging guide roller 22 is repeatedly pivoted from +θ to -θ, whereby the coated optical fiber 20 is alternately twisted clockwise and counterclockwise with respect to the moving direction thereof.

The stationary guide roller 23a in the next stage is placed right beside the swinging guide roller 22, whereas the coated optical fiber 20 comes into contact with the circumferential face of the swinging guide roller 22 by an angle of about 90°, and then moves to the stationary guide roller 23a. The stationary guide roller 23a is formed with a V-shaped narrow groove 25 so as to prevent the coated optical fiber 20 from rotating on the surface of the roller 23a. Since the coated optical fiber 20 is kept from rotating on the surface of the stationary guide roller 23a, the coated optical fiber 20 can be twisted with a high efficiency with respect to the pivoting of the swinging guide roller 22.

In Fig. 4, the guide roller 21 in the stage upstream the swinging guide roller 22 is constituted by pair rollers 21a and 21b, which are placed directly above the swinging guide roller 22. Each pair of rollers 21a and 21b are disposed parallel to each other with a predetermined gap t therebetween When the rotary shaft y of the swinging guide roller 22 pivots from +θ to -θ about the drawing axis z, the coated optical fiber 20 rotates on the surface of the swinging guide roller 22 as in the case of Fig. 3, whereas the part of coated optical fiber 20 located at the guide roller 21 in front of the guide roller 21 is also displaced to swinging directions of the swinging guide roller 22. When the coated optical fiber 20 attains a predetermined displacement or greater, the coated optical fiber 20 comes into contact with one half of the guide roller 21, thereby suppressing the displacement. When the displacement is suppressed as such, the reduction in the amount of twisting applied to the coated optical fiber 20 and the thickness deviation in the first layer coating 19a and second layer coating 19b can effectively be restrained from occurring.

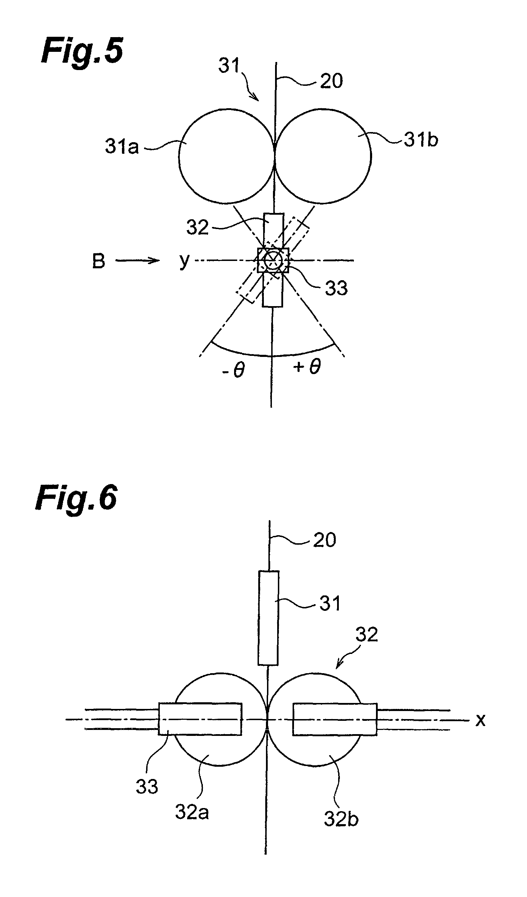

Another method of twisting the coated optical fiber 20 will now be explained. Fig. 5 is a front view showing a guide roller of a type different from that of the swinging guide roller of Figs. 3 and 4, and a stationary guide roller, whereas Fig. 6 is a side view showing the swinging guide roller and stationary guide roller as seen from the direction of B in Fig. 5. In Fig. 5, the coated optical fiber 20 is held by a stationary guide roller 31 constituted by two stationary guide rollers 31a, 31b, and travels downward through a predetermined traveling line. A swinging guide roller 32 constituted by two swinging guide rollers 32a, 32b is disposed below the stationary guide roller 31. The coated optical fiber 20 is held between the swinging guide rollers 32a, 32b, so as to travel downward. Further, a guide roller (not depicted) is disposed below the swinging guide roller 32, so as to change the traveling direction of the coated optical fiber 20 as appropriate, such that the fiber is taken up by a drum.

Each constituent of the swinging guide roller 32 is secured by a securing member 33 so as to be pivotable about the axis y shown in Fig. 5. Also, the securing member 33 is pivotable about the x axis shown in Fig. 6. As a consequence, the swinging roller 32 is pivotable together with the securing member 33 about the axis x shown in Fig. 6. The two swinging guide rollers 32a, 32b are pivoted in synchronization with each other such that, when one of them rotates by +θ about the axis x, the other rotates by -θ. When the swinging guide rollers 32a, 32b holding the coated optical fiber 20 therebetween are pivoted about the axis x as such, the coated optical fiber 20 is twisted. When the swinging guide rollers 32a, 32b are repeatedly pivoted from the position of +θ to the position of -θ and from the position of -θ to the position of +θ, the coated optical fiber 20 can be alternatively twisted clockwise and counterclockwise with respect to the moving direction thereof.

In this method, though a pressing force acts on the coated optical fiber 20 since the coated optical fiber is held between the two swinging guide rollers 32a, 32b, the first layer coating 19a can be prevented from breaking and generating voids if the first layer coating 19a has a breaking strength of at least 4.0 MPa or a Young's modulus of at least 0.4 MPa.

The present invention is a method of making an optical fiber by twisting the coated optical fiber 20 and reducing its polarization mode dispersion (PMD), and takes account of the fact that the PMD value relates to the radius R of swinging guide roller 22, 32 and the tension T of glass optical fiber at the time of drawing.

In general, the transmission loss of an optical fiber can be made smaller as the tension at the time of drawing the optical fiber is greater. Since it is desirable that the transmission loss be 0.3 dB/km or less at a wavelength of 1.55 µm in practice, the drawing tension T is set to at least 2.2 (N/fiber), preferably 2.7 (N/fiber), in order to attain the above-mentioned transmission loss stably. However, since there will be a possibility of breaking the optical fiber if the tension T is too strong, it is necessary that the optical fiber be drawn at a tension taking account of coating conditions of the optical fiber and the like. Therefore, it is preferred that the drawing tension T be 5.0 (N/fiber) or less. The drawing tension T is indicated by the force applied to an optical fiber, and is expressed by (N/fiber).

Letting R (m) be the barrel radius of the swinging guide roller 22, 32, the T/R is set to 28 to 100 when making the coated optical fiber 26. If the T/R is less than 28, the coated optical fiber will slide on the swinging guide roller, or the swinging guide roller itself will become greater and there by deteriorating space efficiency; whereas the PMD value will increase if the T/R exceeds 100.

In addition, the number of swinging movements of swinging guide roller 22, 32 is set to 0.33 to 3.33 (s⁻¹) when making the coated optical fiber 26. If the number of swinging movements is less than 0.33 (s⁻¹), the coated optical fiber 20 cannot be twisted sufficiently, whereby the PMD value cannot be reduced. If the number of swinging movements exceeds 3.33 (s⁻¹), on the other hand, the swinging guide roller 22 may move so fast that the coating of the coated optical fiber 20 will slide on the swinging guide roller 22, whereby the coated optical fiber 20 will twist insufficiently, thus failing to decrease the PMD as well.

When coating the glass optical fiber 13 with the first layer coating 19a, the Young's modulus of the first layer coating 19a is desirably set to 0.2 to 0. 7 (MPa), more desirably 0.4 to 0.7 MPa.

If the Young's modulus of the first layer coating 19a is less than 0.2 MPa, the breaking strength of the first layer coating 19a may decrease so that voids will be likely to occur within the coating due to squeezing upon the pivoting of swinging guide roller 22, 32; whereas it will tend to be difficult to reduce loss increase by lateral pressure and remove the coating if the Young's modulus exceeds 0.7 MPa.

It is also preferred that the breaking strength of the first layer coating 19a be set to at least 4.0 (MPa) when coating the glass optical fiber 13 with the first layer coating 19a. In this case, no voids occur within the first layer coating 19a.

The Young's modulus of the second layer coating 19b is preferably set to 150 to 1500 (MPa) when coating the glass optical fiber 13 with the second layer coating 19b.

If the second layer coating 19b has a Young's modulus of less than 150 MPa, it will tend to be damaged externally with dust (minute foreign matters) and break upon high-tension screening. If the Young' s modulus of the second layer coating 19b exceeds 1500 MPa, on the other hand, it will tend to become difficult to remove the coating.

The Young's moduli of the first layer coating 19a and second layer coating 19b can be adjusted by the molecular weight of polyether part and the kind of diluent monomer. Namely, Young's moduli of the first layer coating 19a and second layer coating 19b can be decreased if the molecular weight of the polyether part is made greater and if a linear monofunctional diluent monomer having a large molucular weight is chosen.

As for the oligomer, the Young's moduli and breaking strengths of the first layer coating 19a and second layer coating 19b can be increased if the molecular weight is lowered so as to enhance the rigidity of the urethane part.

As for the diluent monomer, the Young's moduli and breaking strengths can be raised if the compounding amount of the multifunctional monomer is increased and if a monomer having a high rigidity is chosen.

Preferably, the coating resin material 17a contains an oligomer having a molecular weight of at least 5000, a multifunctional monomer having a methylene group with a carbon number of 5 to 11, and a monomer having a heterocycle and/or a monomer having a multi-membered ring, whereas the multifunctional monomer has a weight ratio of 0.02 to 0.04 with respect to the oligomer.

If the oligomer has a molecular weight of less than 5000, the Young's modulus of first layer coating will tend to increase. Preferably, the molecular weight of the oligomer is 30,000 or less. If the molecular weight exceeds 30,000, the viscosity of the resulting composition will tend to become too high, whereby it will be harder to handle. An example of the oligomers is polyether diol.

If the carbon number of the methylene group is less than 5, the Young's modulus of the first layer coating will tend to become too high, whereby it will be harder to reduce the loss increase by lateral pressure and remove the coating. If the carbon number of the methylene group exceeds 11, on the other hand, the breaking strength of the first layer coating will tend to decrease, whereby voids will be likely to occur within the first layer coating. An example of the multifunctional monomer is nonanediol diacrylate.

An example of the heterocycle is lactam, whereas an example of the monomer having a heterocycle is N-vinyl caprolactam.

An example of the monomer having a multi-membered ring is isobornyl acrylate.

If the weight ratio of the multifunctional monomer with respect to the oligomer is less than 0.02, the breaking strength of the first layer coating will tend to decrease, whereby voids will be likely to occur within the first layer coating. If it exceeds 0.04, on the other hand, the Young's modulus of the first layer coating will tend to become too high, whereby it will be harder to reduce the loss increase by lateral pressure and remove the coating.

The coating resin material 17a may further contain an aliphatic monomer.

Preferably, the first layer coating 19a has an adhesion force of 0.5 to 2.0 (N/cm) with respect to glass.

If the adhesion force is less than 0.5 (N/cm), it will be too small, whereby the first layer coating 19a will tend to peel off from the glass optical fiber 13 if the force for pressing the coated optical fiber 20 against the swinging guide roller 22, 32 increases. If the adhesion force exceeds 2.0 (N/cm), on the other hand, the adhesion force will become too large, whereby the coating removal characteristic will tend to deteriorate.

The adhesion force between the first layer coating 19a and glass can be adjusted by the amount of the polar monomer (e.g., acrylamide, N-vinyl pyrrolidone, and acryloyl morpholine), monomer having a heterocycle, and/or monomer having a multi-membered ring used in the coating resin material 17a. The adhesion force can also be adjusted by a silane coupling agent.

Details of the present invention will now be explained more specifically with reference to examples and comparative examples.

In the present invention, in order to be fully resistant to lateral pressure and abrasions from the outside and prevent transmission loss from increasing due to external forces, the coating of the coated optical fiber is formed by two layers, i.e., the first layer coating 19a and second layer coating 19b, as explained in Fig. 1. The first layer coating 19a is formed from a soft material provided with a cushioning effect, whereas the second layer coating 19b is formed from a hard material resistant to abrasions. In the following examples and comparative examples, physical values concerning the coating of the coated optical fiber (the Young's modulus of the first layer coating, the Young's modulus of the second layer coating, the adhesion force between the first layer coating and glass, and the breaking strength of the first layer coating) were measured as follows :

### 1. Young's Modulus of First Layer Coating

In general, in a relatively soft resin used for the first layer coating, Young's modulus becomes lower in the resin applied to the optical fiber than that measured when the coating material is in a film form. This is because of the fact that the coating attains a high temperature due to the radiant heat and the heat caused by the curing reaction within the UV irradiating apparatus used in the optical fiber drawing apparatus, whereby chain transfer reactions and termination reactions become predominant, thus keeping crosslinking reactions from advancing. As the Young's modulus of the first layer coating of the coated optical fiber, the value in the state applied to the coated optical fiber is important.

Therefore, the Young's modulus of the first layer coating was directly calculated by using Push-in-modulus method (see literature: 43rd IWCS [1994] p. 552). The specific measuring method is as follows: First, a bundle of coated optical fibers were held in an acrylic pipe, the gap between the pipe and each coated optical fiber was filled with an epoxy resin, which was then cured, and thus obtained assembly was sliced with a cutter, whereby a disc-shaped sample having a predetermined thickness was prepared. Thereafter, using a microhardness tester, the glass part of the sliced disc-shaped sample was pressed with an indenter. From the amount of displacement of glass and indentation force at that time, the Young's modulus of the first layer coating was calculated. Though the second layer coating is integrally included in the coating, the second layer coating can substantially be neglected since the Young's modulus of the second layer coating is greater than that of the first layer coating by at least two digits.

### 2. Young's Modulus of Second Layer Coating

The second layer coating was calculated as follows: First, the coated optical fiber was cut into a length of several tens of centimeters, thus cut optical fiber was immersed in acetone so that the coating swelled, and the pipe-shaped coating was collected. After thus collected pipe-shaped coating was dried, its state was adjusted for at least 24 hours at a temperature of 23°C±2°C and a relative humidity of 50±5%, then its tensile strength at the time of 2.5% extension was measured at a gauge distance of 25 mm and a pulling rate of 1 mm/min, and thus measured value was taken as the Young's modulus of the second layer coating. The other features were in conformance with JIS K7127. Though thus collected coating is one in which the first and second layer coatings are integrated with each other, the first layer coating can substantially be neglected since the Young's modulus of the second layer coating is greater than that of the first layer coating by at least two digits.

### 3. Adhesion Force between First Layer Coating and Glass

The adhesion force between glass and the first layer coating relating to peeling of coating and the coating removal characteristic were calculated by preparing a test sheet in the following procedure:
(i) First, a silica glass sheet was immersed in sulfuric acid for at least 5 minutes, so as to wash the rear side thereof.
(ii) Next, a resin to construct the first layer coating was applied onto thus washed silica glass sheet, and was cured upon UV irradiation at 100 mJ/cm², whereby a test sheet was prepared. After the coating resin material was cured, the thickness and width of the coating were 250 µm and 50 mm, respectively.
(iii) Thus prepared test sheet was left for 1 week in an atmosphere at a temperature of 25°C and a relative humidity of 50%.
(iv) The maximum value of force used when peeling the resin coating formed on the silica glass sheet by 50 mm in the direction of 180 degrees at a pulling rate of 200 mm/min was measured and converted into a value per unit width, which was taken as the adhesion force between the first layer coating and glass. The other features were in conformance with JIS Z0237.

### 4. Breaking Strength of First Layer Coating

The breaking strength of the first layer coating relating to the occurrence of voids in the first layer coating caused by the swinging operation for twisting the coated optical fiber was calculated by the following procedure:
(i) First, the coating resin material to construct the first layer coating was cured upon irradiation with UV rays at 100 mJ/cm² in a nitrogen atmosphere, whereby a test sheet having a film thickness of about 100 µm was prepared.
(ii) Next, thus prepared test sheet was shielded from light, and its state was adjusted for at least 24 hours at a temperature of 23°C±2°C and a relative humidity of 50%±5%
(iii) Then, a test piece of JIS 2 type was cut out from the test sheet and was subjected to a pulling test at a gauge distance of 25 mm, a chuck interval of 80±5 mm, and a pulling rate of 50 mm/min, and the strength at which the test piece broke was taken as a breaking strength. The other features were in conformance with JIS K7127.

### Examples 1 to 19 and Comparative Examples 1 to 3

Next, samples No. 1 to No. 22 of coated optical fibers were made by the making apparatus shown in Fig. 1 using the swinging guide roller 22 (see Figs. 3 and 4). The results of evaluation of thus obtained samples No. 1 to No. 22 of coated optical fibers are shown in the following. The evaluated items were PMD values, whether or not they broke during drawing, loss characteristics by lateral pressure, coating removal characteristics, occurrence of voids in the coating, and occurrence of peeling in the coating. In the making of each of samples No. 1 to No. 22 of coated optical fibers, the drawing rate was 100 m/min.

First, as for samples No. 1 to No. 9, PMD values and whether or not they broke during drawing were evaluated by using the tension T (N/fiber) at the time of drawing the glass optical fiber, the radius R (m) of swinging guide roller, and the number of swinging movements (s⁻¹) of swinging guide roller. Table 1 shows the results. Table 2 shows compositions of coating resin materials of the first and second layer coatings.

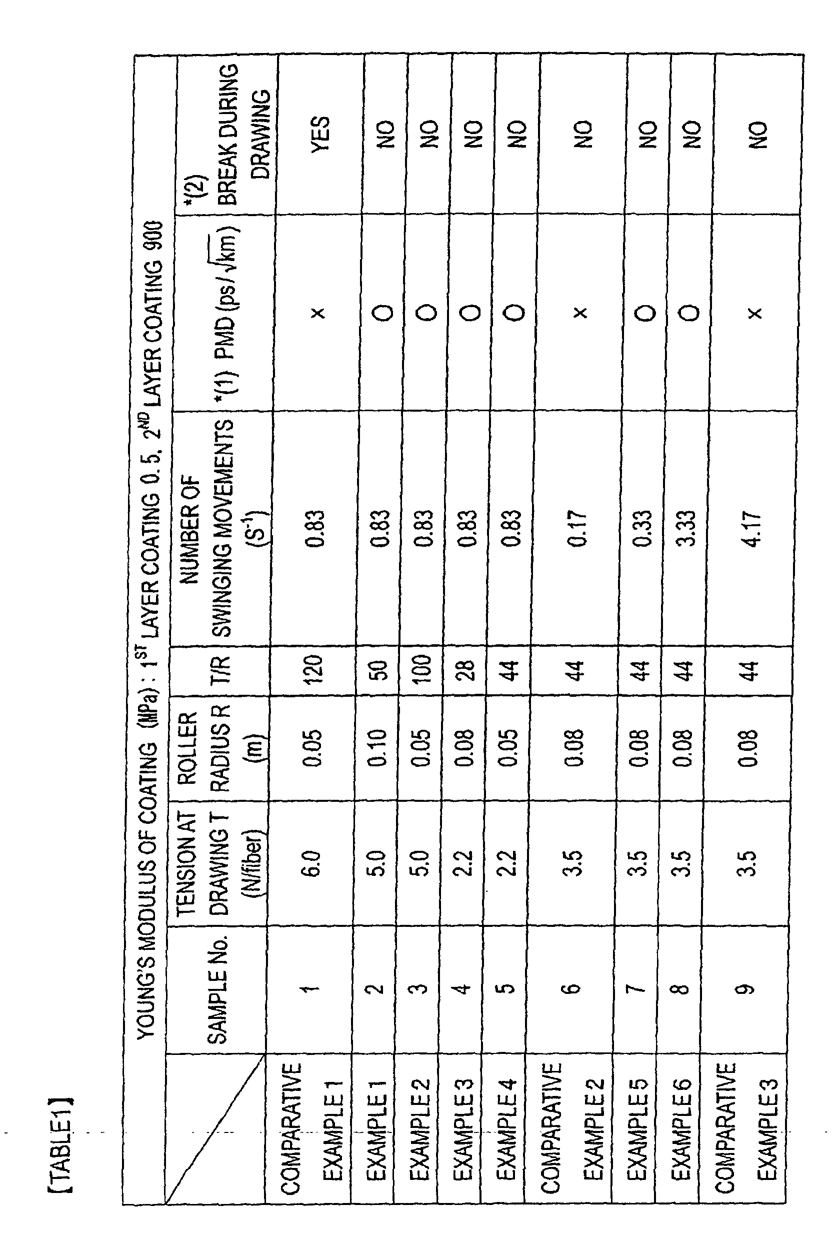

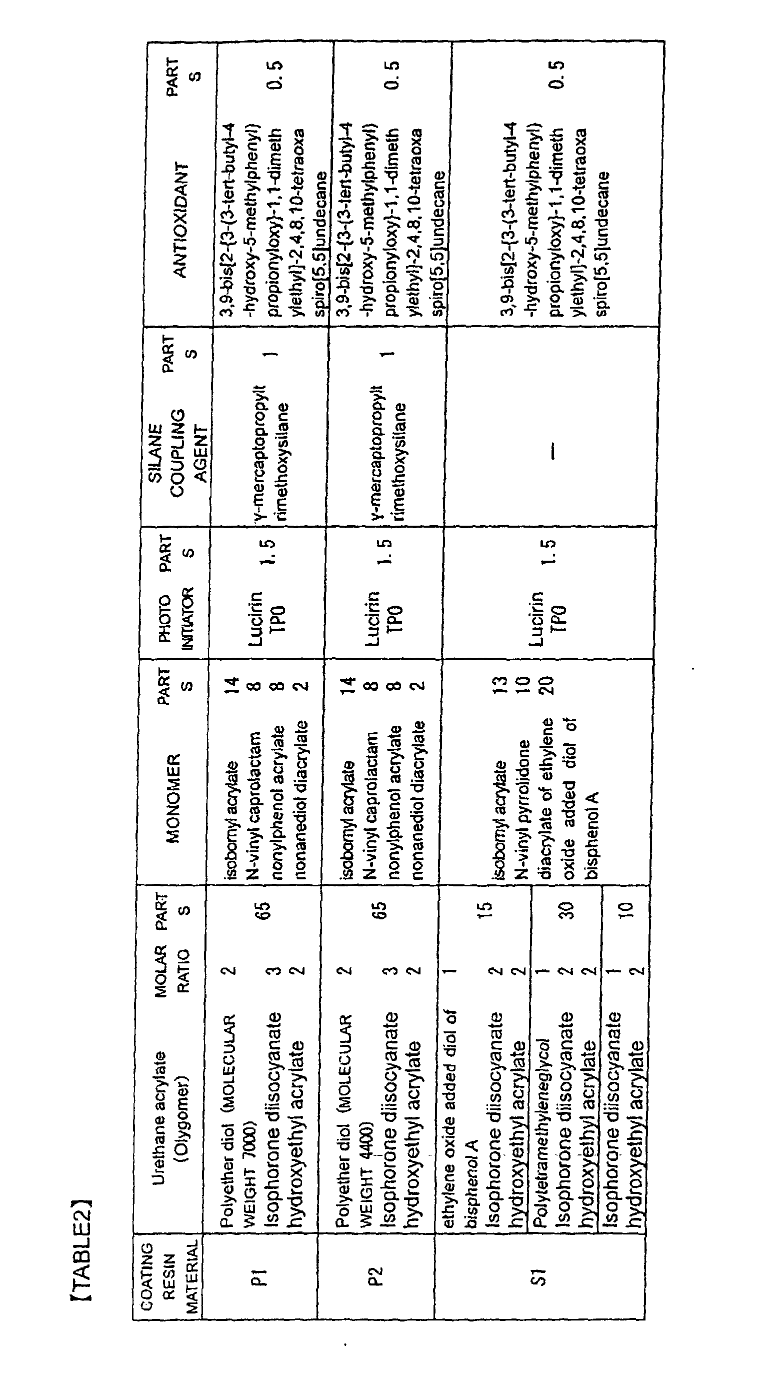

As for samples No. 1 to No. 9, P1 was used for the coating resin material of the first layer coating, so as to attain a Young's modulus of 0.5 (MPa), whereas S1 was used for the coating resin material for the second layer coating, so as to attain a Young's modulus of 900 (MPa). The number of swingingmovements (s⁻¹) is expressed by the number of pivoting movements of swinging guide roller per second, in which one pivoting movement is one cycle of movement from +θ to -θ and then from -θ to +θ. In Table 2, substances listed in the column of "urethane acrylate" indicate materials of urethane acrylate, whereas molar ratios indicate those of these materials. The parts indicate those of urethane acrylate.

In Table 1, whether PMD values were favorable or not and whether breaks occur during drawing or not were evaluated as follows:

### (1) Polarization Mode Dispersion (PMD)

### Characteristic

For transmitting and receiving light stably, it is necessary that two polarization modes orthogonal to each other propagating through the optical fiber be prevented from fluctuating, and that the PMD value be lowered. Therefore, cases yielding a PMD value of 0.2 (ps · km^{-1/2}) or less were evaluated as "favorable" and indicated by "O" in Table 1. Cases yielding a PMD value exceeding 0.2 were evaluated as "poor" and indicated by "×" in Table 1.

### (2) Breaks during Drawing

Though optical fibers can reduce their transmission loss when drawn at a high tension, they will break if the tension is too high. Therefore, as for glass optical fibers before forming coatings, whether they break or not upon drawing were investigated while varying the tension.

As shown in Table 1, the PMD value was favorable when T/Rwas 100 or less according to samples No. 2 to No. 5 (Examples 1 to 4), but deteriorated in sample No. 1 (Comparative Example 1) in which T/R was 120. The PMD value was presumed to have deteriorated because of the fact that the pressing force of the swinging guide roller against the coated optical fiber became so high that the coating was collapsed, which increased the rotating resistance, thereby making the amount of twisting of the optical fiber insufficient.

It was also found that breaks were likely to occur during drawing when the tension T at drawing became about 6.0 (N/fiber).

From results of PMD values in samples No. 6 to No. 9 (Comparative Example 2, Examples 5 and 6, and Comparative Example 3), it was seen that coated optical fibers could not be twisted sufficiently and thus failed to lower their PMD if the number of swinging movements was 0.33 (s⁻¹) or less. It was also seen that, if the number of swinging movements exceeded 3.33 (s⁻¹), the movement of swinging guide roller was too fast, which caused optical fibers to slip on the roller and made the twisting of the optical fibers insufficient, thus failing to lower the PMD as well.

Next, as for samples No. 10 to No. 15 (Examples 7 to 12), the increase by lateral pressure, screening fiber break frequencies, and coating removal characteristics were evaluated while using the Young's modulus of coating as a parameter. Table 3 shows the results.

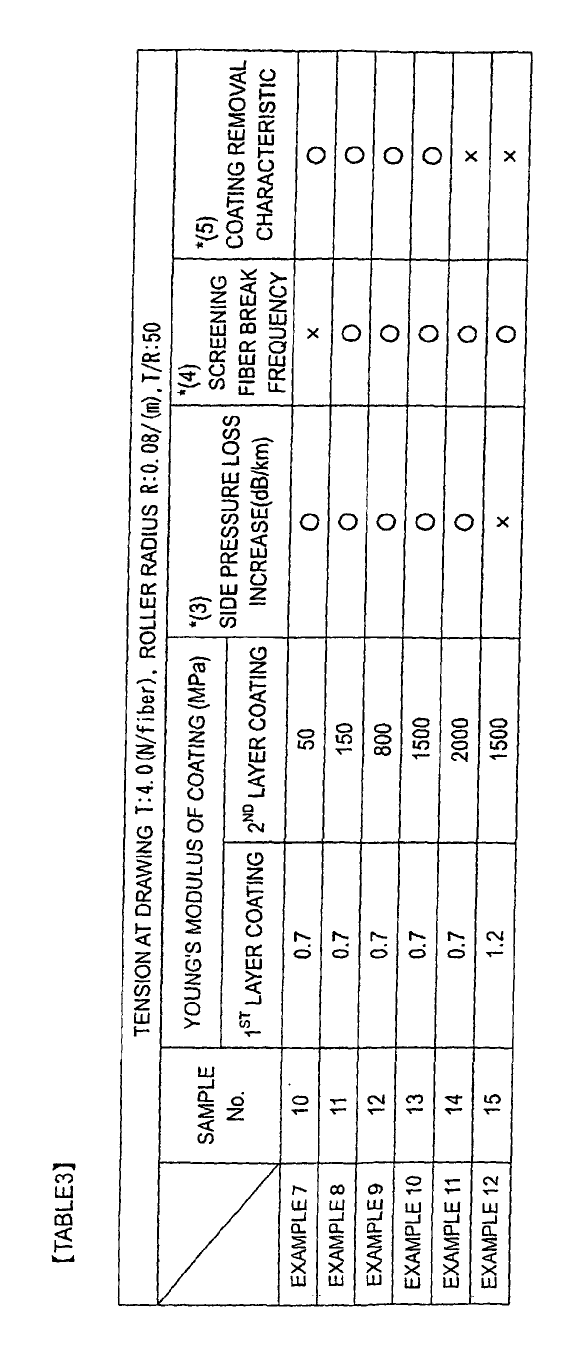

The coating resin material of the first layer coating in samples No. 10 to No. 14 was one in which the ratio of the monofunctional monomer to the oligomer was decreased in the composition of P1 shown in Table 2, whereby the Young's modulus of the first layer coating was adjusted. As the coating resin material of the first layer coating in sample

No. 15, P2 in Table 2 was used.

The coating resin material of the second layer coating in samples No. 10 to No. 15 was one in which the ratio of the monofunctional monomer to the oligomer was increased/decreased in the composition of S1 shown in Table 2, whereby the Young's modulus of the second layer coating was increased/decreased. Here, when preparing sample No. 10 to No. 15, the tension T at the time of drawing the glass optical fiber was 4.0 (N/fiber), the swinging guide roller radius R was 0.08 (m), and T/R was 50, so that they were held constant. The number of swinging movements was 0.83 s⁻¹.

Whether the loss increase by lateral pressure, screening fiber break frequency, and coating removal characteristics were favorable or not was determined as follows:

### (3) Loss Increase By Lateral Pressure

Optical fibers increase their transmission loss upon receiving lateral pressures and abrasions, which is greatly influenced by coating materials thereof. A sandpaper sheet of JIS #1000 was wound about a bobbin having a barrel diameter of about 280 mm, the transmission loss yielded when the coated optical fiber was wound thereon by a length of 600 m at a tension of 0.98 (N/fiber) was defined as L1, the transmission yielded when the coated optical fiber was in the state of a bundle of 1000 m (not wound about the bobbin, the lateral pressure being assumed to be zero in this state) was defined as L2, and (L1 - L2) was defined as the loss increase by lateral pressure. Cases yielding a loss increase by lateral pressure of 1 (dB/km) or less was evaluated as "favorable" and indicated by "○" in Table 3. Cases yielding a loss increase by lateral pressure exceeding 1 (dB/km) were indicated by "×". The transmission losses L1, L2 were measured by OTDR at a wavelength of 1.55 µm.

### (4) Screening Fiber Break Frequency

The coating of a coated optical fiber has an important role of preventing external damages from occurring due to foreign matters. Coatings susceptible to external damages make it easier for glass to be damaged, thereby increasing the frequency of breaking at screening. Therefore, a high tensile tension was applied to the coated optical fiber after the making thereof, so as to break inferior parts having a low strength. The tension at that time was 21.6 (N/fiber). Cases yielding a screening fiber break frequency of 5 times/1000 km or less was evaluated as "favorable" and indicated by "○" in Table 3. Cases yielding a screening break frequency exceeding 5 times/1000 km were indicated by "×" in Table 3.

### (5) Coating Removal Characteristic

While it is necessary for the coating of a coated optical fiber to come into close contact with a glass optical fiber so as to enhance the strength of the glass optical fiber andprotect it, it is essential that the coating of the coated optical fiber be removed when connecting optical fibers and so forth. Using a coating stripper "No-Nik Fiberoptic Stripper NN203 (manufactured by Clauss, USA)", the coating removal was carried out, whereupon cases where coatings could be removed from coated optical fibers were evaluated as "favorable" and were indicated by "○" in Table 3. Cases where coatings could not easily be removed from coated optical fibers were indicated by "×" in Table 3.

In each of samples No. 11 to No. 15 (Examples 8 to 12), the PMD value was "favorable", and there was "no" fiber break during drawing. In sample No. 10 (Example 7), screening was poor, though the PMD value was favorable. This proved that external damages were likely to occur due to dust (minute foreign matters) when the second layer coating was soft, whereby fiber breaks were likely to occur upon high-tension screening. On the other hand, it was found that the coating was hard to remove when the Young's modulus of the second layer coating reached about 2000 (MPa) as in sample No. 14. As a consequence, it was seen that the Young's modulus of the second layer coating preferably fell within the range of 150 to 1500 (MPa).

While sample No. 15 was poor in terms of increase by lateral pressure and coating removal characteristic, the Young's modulus of its first layer coating was 1.2 (MPa) and thus was somewhat higher. As a consequence, it was seen that, in order to enhance the reduction in loss increase by lateral pressure and coating removal characteristic, the first layer coating was desirably as soft as possible, and the Young's modulus was preferably 0.7 (MPa) or less. Also, since sample No. 15 used a coating resin material different from P1 in Table 2 only in the molecular weight (4400) of the oligomer (polyether diol) as the coating resin material of the first layer coating, it was found that the molecular weight of oligomer was preferably at least 5000 from the viewpoint of softening the first layer coating.

Next, the occurrence of voids, peeling at the interface between the glass optical fiber and the first layer coating, and coating removal characteristic in samples No. 16 to 18 (Examples 13 to 15) were evaluated while using the breaking strength of the first layer coating and the Young's modulus of coating as parameters. Table 4 shows results.

## Claims

1. A method of making a coated optical fiber comprising:
a first step of obtaining a glass optical fiber by drawing an optical fiber glass preform;
a second step of forming said glass optical fiber with two layers of coating; and
a third step of applying a twist to said glass optical fiber by using a swinging guide roller;
wherein said glass optical fiber has a tension T of at least 2.2 (N/fiber) in said first step; and
wherein T/R is 28 to 100, where R (m) is the barrel radius of said swinging guide roller, and the number of swinging movements of said swinging guide roller is 0.33 to 3.33 (s⁻¹) in said third step.

2. A method of making a coated optical fiber according to claim 1, wherein said glass optical fiber has a tension T of 5.0 (N/fiber) or less in said first step.

3. A method of making a coated optical fiber according to claim 1, wherein, in said second step, said glass optical fiber is coated with a first layer coating such that said first layer coating has a Young's modulus of 0.2 to 0.7 (MPa).

4. A method of making a coated optical fiber according to claim 1, wherein, in said second step, a second layer coating is coated on said first layer coating such that said second layer coating has a Young's modulus of 150 to 1500 (MPa).

5. A method of making a coated optical fiber according to claim 1, wherein, in said second step, a first layer coating having a breaking strength of at least 4.0 (MPa) is formed on said glass optical fiber.

6. A method of making a coated optical fiber according to claim 1, wherein, in said second step, a first layer coating having an adhesion force of 0.5 to 2.0 (N/cm) with respect to glass is formed on said glass optical fiber.

7. A method of making a coated optical fiber according to claim 1, wherein, in said second step,
said glass optical fiber is formed with a first layer coating by using a coating resin material containing:
an oligomer having a molecular weight of at least 5000,
a multifunctional monomer having a methylene group with a carbon number of 5 to 11, and
a monomer having a heterocycle and/or a monomer having a multi-membered ring,
said multifunctional monomer having a weight ratio of 0.02 to 0.04 with respect to said oligomer.

8. A coated optical fiber made by the method of making a coated optical fiber according to one of claims 1 to 7.
